# EUROPEAN PATENT SPECIFICATION

(11) **EP 3 104 572 B1**
(45) Date of publication and mention of the grant of the patent: **29.04.2020**
(21) Application number: 14884920.1
(22) Date of filing: 20.06.2014
(51) Int. Cl.: H04L 29/06, H04N 1/32

(54) **DATA SERVICE PROCESSING METHOD AND DEVICE BASED ON SESSION INITIATION PROTOCOL (SIP)**
DATENDIENSTVERARBEITUNGSVERFAHREN UND VORRICHTUNG BASIEREND AUF EINEM SITZUNGSEINLEITUNGSPROTOKOLL (SIP)
PROCÉDÉ ET DISPOSITIF DE TRAITEMENT DE SERVICE DE DONNÉES REPOSANT SUR UN PROTOCOLE D'OUVERTURE DE SESSION (SIP)

(30) Priority: 04.03.2014 CN 201410077155
(43) Date of publication of application: 14.12.2016
(73) Proprietor: ZTE Corporation, Shenzhen, Guangdong 518057 (CN)
(72) Inventor: XU, Baishan, Shenzhen Guangdong 518057 (CN); SUN, Xiaowei, Shenzhen Guangdong 518057 (CN)
(74) Representative: Baudler, Ron
(86) International application number: PCT/CN2014/080441
(87) International publication number: WO 2015/131466

(56) References cited:
- WO-A1-2010/142349
- CN-A- 101 448 014
- CN-A- 101 977 201
- CN-A- 101 997 997
- US-A1- 2008 089 324
- US-B1- 7 127 487
- "Procedures for real-time Group 3 facsimile communication over IP networks; T.38 (09/10)", ITU-T STANDARD, INTERNATIONAL TELECOMMUNICATION UNION, GENEVA ; CH, no. T.38 (09/10), 13 September 2010 (2010-09-13), pages 1-157, XP044131153, [retrieved on 2012-03-16]

## Description

### Technical Field

The present invention relates to the field of communications, and in particular, to a method and apparatus for processing a data service based on a Session Initiation Protocol (SIP for short).

### Background of the Related Art

Fax communication is a communication manner of transmitting static images such as characters, images, photos or the like from a transmitting end to a receiving end through a wired or wireless channel by using the scanning and photoelectric conversion technologies, and redisplaying the original static images in a record form at the receiving end. There are two manners to implement a fax service in a communication device. One manner is a self-negotiation manner, and the other manner is a full-control manner. The self-negotiation manner is that after detecting a fax signal from a fax machine, a Media Gateway (MG for short) or an SIP User Agent (UA for short) implements a fax service through interior negotiation of media streams. The full-control manner is that the MG or the SIP UA detects a fax signal transmitted by a fax machine, loads the fax signal into SIP signaling, and transmits the signaling to a Media Gateway Controller (MGC for short) or a proxy server (SIP proxy), and the MGC or the SIP proxy controls switching from a media voice channel to a data fax channel.

According to different fax devices, faxes may be divided into high-speed modem, low-speed modem, high-speed faxing, and low-speed faxing. Signals reported by the high-speed modem and the high-speed faxing are ANSBAR, ANSAMBAR and ANSAM. An ANS signal is reported by the low-speed modem. A V21FLAG signal is reported by the low-speed faxing. In the H.248 protocol, a fax voice is reported to a MGC through signaling, and the MGC controls switching of the voice channel by the MG.

Therefore, there are problems in the related art that for negotiation using a media stream, a data service failure rate is high, the negotiation process is unclear, and a core network is unable to effectively control data service processing.

The document US 2008/0089324 A1 discloses a method comprising: generating a new Differentiated Services Code Point (DSCP) value; adding the new DSCP value to a field of an existing protocol session; and transmitting the new DSCP value in the protocol session.

The document "Procedures for real-time Group 3 facsimile communication over IP networks; T.38 (09/10)" discloses the procedures to be applied to allow Group 3 facsimile transmission between terminals where a portion of the transmission path used between terminals includes an IP network.

Document CN 101 997 997 discloses a system for realizing Internet telephony call transfer by utilizing SIP protocol, comprising Internet phoney terminals, SIP gateways and soft switch equipment; wherein each SIP gateway is connected with one Internet phoney terminal, the soft switch equipment is connected with the SIP gateway by virtue of INTERNET network, and the soft switch equipment and a plurality of SIP gateways form a one-to-many internetworking system. Simple INFO method is adopted to realize complex call service, and call process is tightly combined with the soft switch equipment, thus the method is simple and efficient.

### Summary of the Invention

The present invention provides a method and apparatus for processing a data service based on an SIP, to at least solve the problems in the related art that for negotiation using a media stream, a data service failure rate is high, the negotiation process is unclear, and a core network is unable to effectively control data service processing.

According to an aspect of the present invention, a method for processing a data service based on a Session Initiation Protocol (SIP) is provided, as further defined in claim 1.

Wherein, determining, according to an INFO message in the SIP, a data service performed by calling/called parties based on the SIP comprises:
determining, according to a data service event carried in a text form in a message header or a message body of the INFO message in the SIP, the data service performed by the calling/called parties based on the SIP.

Wherein, in a case that the data service is a fax service, processing the data service between the calling/called parties through a re-INVITE message comprises:
negotiating on a fax rate and a fax mode of the fax service performed by the calling/called parties through the re-INVITE message; and
controlling the calling/called parties to switch a voice channel between the calling/called parties to a fax channel according to a negotiation result.

Wherein, negotiating on a fax rate and a fax mode of the fax service performed by the calling/called parties through the re-INVITE message comprises at least one of the following:
when a fax transmitting side is high-speed faxing, in a case that a receiving side is low-speed faxing, determining that the negotiation result is low-speed transceiving;
when a fax transmitting side is low-speed faxing, in a case that a receiving side is low-speed faxing, determining that the negotiation result is low-speed transceiving;
when a fax transmitting side is high-speed faxing, in a case that a receiving side is high-speed faxing, determining that the negotiation result is high-speed transceiving; and
when a fax transmitting side is low-speed faxing, in a case that a receiving side is high-speed faxing, determining that the negotiation result is low-speed faxing.

Wherein, processing the data service between the calling/called parties through a re-INVITE message comprises:
processing the data service between the calling/called parties by means of adding an identity field which is set to identify the data service in the SDP in the re-INVITE message.

According to another aspect of the present invention, an apparatus for processing a data service based on a Session Initiation Protocol (SIP) is provided, as further defined in claim 6.

Wherein, the determination module comprises:
a determination unit configured to determine, according to a data service event carried in a text form in a message header or a message body of the INFO message in the SIP, the data service performed by calling/called parties based on the SIP.

Wherein, the processing module comprises:
a negotiation unit configured to, in a case that the data service is a fax service, negotiate on a fax rate and a fax mode of the fax service performed by the calling/called parties through the re-INVITE message; and
a switching unit configured to control the calling/called parties to switch a voice channel between the calling/called parties to a fax channel according to a negotiation result.

Wherein, the processing module comprises:
a processing unit configured to process the data service between the calling/called parties by means of adding an identity field which is set to identify the data service in the SDP in the re-INVITE message.

With the present invention, a data service performed by calling/called parties based on the SIP is determined according to an INFO message in the SIP; and the data service between the calling/called parties is processed through a re-INVITE message. The problems in the related art that for negotiation using a media stream, a data service failure rate is high, the negotiation process is unclear, and a core network is unable to effectively control data service processing are solved, thereby achieving the effects of effectively improving a success rate of the data service processing, making the negotiation process clear, and enabling the core network to effectively control the data service processing.

### Brief Description of Drawings

The accompanying drawings described herein are used to provide a further understanding of the present invention and constitute a part of this application, and the schematic embodiments of the present invention and the descriptions thereof are used to explain the present invention and do not constitute an improper limitation on the present invention. In the accompanying drawings:
Fig. 1 is a flowchart of a method for processing a data service based on an SIP according to an embodiment of the present invention;
Fig. 2 is a structural block diagram of an apparatus for processing a data service based on an SIP according to an embodiment of the present invention;
Fig. 3 is a preferable structural block diagram of a determination module 22 in the apparatus for processing a data service based on an SIP according to an embodiment of the present invention;
Fig. 4 is a first preferable structural block diagram of a processing module 24 in the apparatus for processing a data service based on an SIP according to an embodiment of the present invention;
Fig. 5 is a second preferable structural block diagram of the processing module 24 in the apparatus for processing a data service based on an SIP according to an embodiment of the present invention;
Fig. 6 is a flowchart in a scenario of receiving a fax at a low speed and transmitting a fax at a high speed according to a preferable embodiment of the present invention; and
Fig. 7 is a flowchart of a POS machine establishing a data transfer channel according to a preferable embodiment of the present invention.

### Preferred Embodiments of the Invention

The present invention will be described in detail below with reference to accompanying drawings and in conjunction with embodiments. It should be illustrated that the embodiments in the application and features in the embodiments can be combined with each other without conflict.

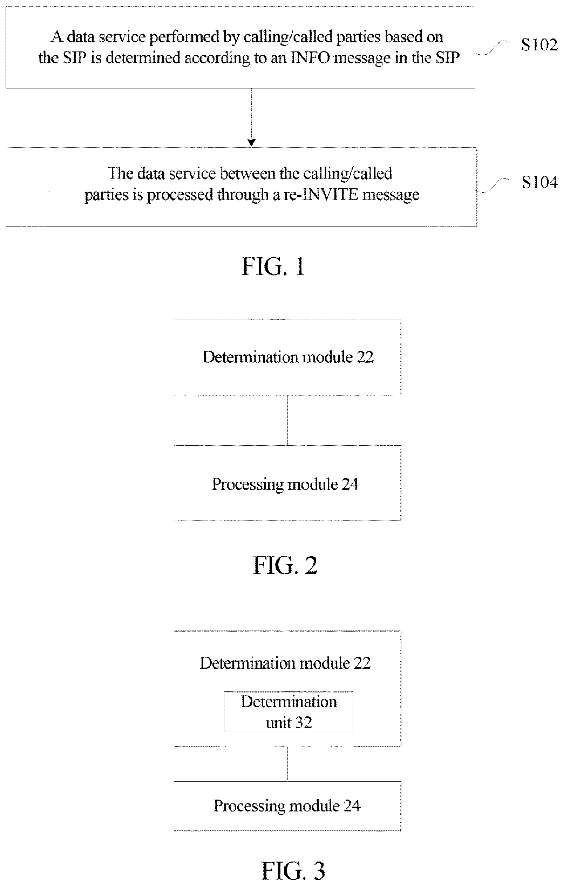

In this embodiment, a method for processing a data service based on an SIP is provided. Fig. 1 is a flowchart of a method for processing a data service based on an SIP according to an embodiment of the present invention. As shown in Fig. 1, the flow comprises the following steps.

In step S102, a data service performed by calling/called parties based on the SIP is determined according to an INFO message in the SIP.

In step S104, the data service between the calling/called parties is processed through a re-INVITE message.

With the above steps, a data service performed by calling/called parties based on the SIP is determined according to an INFO message in the SIP; and the data service between the calling/called parties is processed through a re-INVITE message. Compared with negotiation of a data service using a media stream in the related art, the problems in the related art that for negotiation using a media stream, a data service failure rate is high, the negotiation process is unclear, and a core network is unable to effectively control data service processing are solved, thereby achieving the effects of effectively improving a success rate of data service processing, making the negotiation process clear, and enabling the core network to effectively control the data service processing.

It should be illustrated that the above data service may include multiple services, for example, at least one of a fax service, a modem service, and a Point Of Sale (POS) machine service. When a data service performed by calling/called parties based on the SIP is determined according to an INFO message in the SIP, multiple implementations may be used. For example, according to a data service event carried in a text form in a message header or a message body of the INFO message in the SIP, the data service performed by calling/called parties based on the SIP may be determined.

Wherein, when the data service between the calling/called parties is processed through a re-INVITE message, multiple implementations may be used for different service data. For example, in a case that the data service is a fax service, a fax rate and a fax mode of the fax service performed by the calling/called parties may be negotiated through the re-INVITE message; and the calling/called parties may be controlled to switch a voice channel between the calling/called parties to a fax channel according to a negotiation result.

In addition, there may also be multiple scenarios applied when a fax rate and a fax mode of the fax service performed by the calling/called parties are negotiated through the re-INVITE message. The various scenarios will be described below. When a fax transmitting side is high-speed faxing, in a case that a receiving side is low-speed faxing, it is determined that the negotiation result is low-speed transceiving. When a fax transmitting side is low-speed faxing, in a case that a receiving side is low-speed faxing, it is determined that the negotiation result is low-speed transceiving. When a fax transmitting side is high-speed faxing, in a case that a receiving side is high-speed faxing, it is determined that the negotiation result is high-speed transceiving. When a fax transmitting side is low-speed faxing, in a case that a receiving side is high-speed faxing, it is determined that the negotiation result is low-speed faxing.

Wherein, when the data service between the calling/called parties is processed through a re-INVITE message, multiple processing manners may also be used. For example, the data service between the calling/called parties may be processed by means of adding an identity field which is used to identify the data service in the SDP in the re-INVITE message. For example, when the data service is a fax service, the data service may be identified by adding fields such as a=T38fax or a=fax or a=vbd in SDP media description.

In this embodiment, an apparatus for processing a data service based on an SIP is further provided. The apparatus is configured to achieve the above embodiment and preferable implementations, which have been described and will not be repeated. As used below, a term "module" may be a combination of software and/or hardware which achieves predetermined functions. Although the apparatus described in the following embodiments is preferably achieved by software, an implementation of hardware or a combination of software and hardware can also be conceived.

Fig. 2 is a structural block diagram of an apparatus for processing a data service based on an SIP according to an embodiment of the present invention. As shown in Fig. 2, the apparatus comprises a determination module 22 and a processing module 24. The apparatus will be described below.

The determination module 22 is configured to determine, according to an INFO message in the SIP, a data service performed by calling/called parties based on the SIP. The processing module 24 is configured to process the data service between the calling/called parties through a re-INVITE message.

Fig. 3 is a preferable structural block diagram of a determination module 22 in the apparatus for processing a data service based on an SIP according to an embodiment of the present invention. As shown in Fig. 3, the determination module 22 comprises a determination unit 32. The determination unit 32 will be described below.

The determination unit 32 is configured to determine, according to a data service event carried in a text form in a message header or a message body of the INFO message in the SIP, the data service performed by calling/called parties based on the SIP.

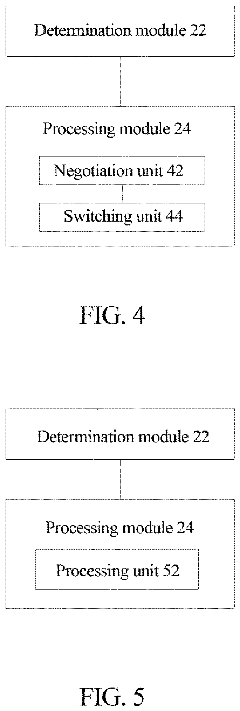

Fig. 4 is a first preferable structural block diagram of a processing module 24 in the apparatus for processing a data service based on an SIP according to an embodiment of the present invention. As shown in Fig. 4, the processing unit 24 comprises a negotiation unit 42 and a switching unit 44. The processing module 24 will be described below.

The negotiation unit 42 is configured to, in a case that the data service is a fax service, negotiate on a fax rate and a fax mode of the fax service performed by the calling/called parties through the re-INVITE message; and the switching unit 44 is connected to the above negotiation unit 42, and is configured to control the calling/called parties to switch a voice channel between the calling/called parties to a fax channel according to a negotiation result.

Fig. 5 is a second preferable structural block diagram of a processing module 24 in the apparatus for processing a data service based on an SIP according to an embodiment of the present invention. As shown in Fig. 5, the processing module 24 comprises a processing unit 52. The processing unit 52 will be described below.

The processing unit 52 is configured to process the data service between the calling/called parties by means of adding an identity field which is set to identify the data service in the SDP in the re-INVITE message.

Until now, there is no international standard flow about implementing a fax service using the SIP protocol. The SIP, as the most important communication protocol in the core network system, gets more and more attention in the industry, and faxing is a narrowband service and is indispensable. Therefore, researches on the SIP fax service are particularly important. In the embodiments of the present invention, a method for implementing a fax service in a full-control mode through the SIP protocol is provided. After establishing a session, an SIP user reports a fax voice through an INFO message, and implementation of the fax service is then controlled by an IMS core network through SIP signaling. The implementation of the method will be described below.

A monitored fax voice is reported by using an INFO method in the SIP protocol, negotiation of the fax mode (for example, t38 and t30) is implemented by using a re-INVITE message, to switch a voice channel to a data channel. For example, it is identified by adding fields such as a=T38fax or a=fax or a=vbd or the like in Session Description Protocol (SDP for short) media description.

The purpose of the INFO method is to allow transfer of control information related to the session. The control information is generated during the session. The INFO method neither changes a calling state of the session, nor changes a state of an established session. The control information generated in the session can be arranged in a message header or a message body of the INFO. In this embodiment, a fax voice event (for example, ANSBAR, ANSAMBAR or the like) detected by a UA is arranged in the message body of the INFO in an xml format. As a Content-Type field identifies a type of the message body, it needs to define the Content-Type: application/faxinfo+xml, and define a start identifier of the fax voice in the xml as:
<event>dtone=ANS </event> (or dtone= ANSBAR, ANSAMBAR, ANSAM, V21FLAG).An end identifier of the fax voice in the xml is defined as: <event>faxchannchng=EOF </event>.

After receiving the INFO message, the proxy server answers with 200 OK to confirm the reception. Then, the xml field in the INFO is processed. For example, the proxy server may fill an SDP field in a re-INVITE message according to the reported fax voice event, and then transmit it to the calling/called parties. The IMS controls the calling/called parties to switch a channel through the re-INVITE message, so as to implement the fax service.

As with the fax service, both the modem service (high-speed/low-speed) and the POS machine service belong to the domain of data services, and correspond to the same SIP signaling flow. The only difference is that the detected service voices are different. The fax service detects various fax voices, and the modem service detects a VBD signal. Correspondingly, in the SIP signaling, the types of the signals reported by the INFO message are different, but the service switching flows are the same. Therefore, the present invention is also applied to data services such as high-speed modem, low-speed modem, POS machine or the like, so that establishment and negotiation processes of various data services based on voices can also be implemented under the control of the IMS core network.

With the above embodiments and preferable implementations, media channel attributes are configured according to the actually monitored fax voice, and are notified to a counterpart, to ensure consistency of media attributes between the two ends, thereby reducing a fax failure rate to minimum. In addition, the fax negotiation process is clearly seen through the signaling layer, and the final fax rate and fax mode of the negotiation are clear at a glance. Currently, a fax negotiation result can only be analyzed through a media stream, and for the analysis of the media stream, corresponding software tools must be used, and a knowledge base in this field must be possessed, which are quite tedious. However, with the negotiation of a signaling layer, even for engineers without too much base of the SIP protocol, the fax service can be understood by only paying attention to several keywords in the fax negotiation process.

For the modem and pos machine data services, signals may also be reported by using the INFO message. Under the control of the IMS core network, the establishment processes of various data channels are totally the same as the signaling interaction process of the establishment of the full-control fax.

It should be illustrated that there are primarily the following five instances of the fax application scenarios, i.e., (1) a fax transmitting side is high-speed faxing, a receiving side is low-speed faxing, and final negotiation is low-speed transceiving; (2) a fax transmitting side is low-speed faxing, a receiving side is low-speed faxing, and final negotiation is low-speed transceiving; (3) a fax transmitting side is high-speed faxing, a receiving side is high-speed faxing, and final negotiation is high-speed transceiving; (4) a fax transmitting side is low-speed faxing, a receiving side is high-speed faxing, and final negotiation is low-speed transceiving; and (5) for data services such as MODEMXPOS machine or the like, a data transfer channel is established.

In the five fax application scenarios enumerated above, the most complex negotiation process is the fourth scenario. For the method of reporting a fax voice using SIPINFO and implementing negotiation of a fax mode using an SIP re-INVITE, the present invention provides a typical instance under the fourth application scenario.

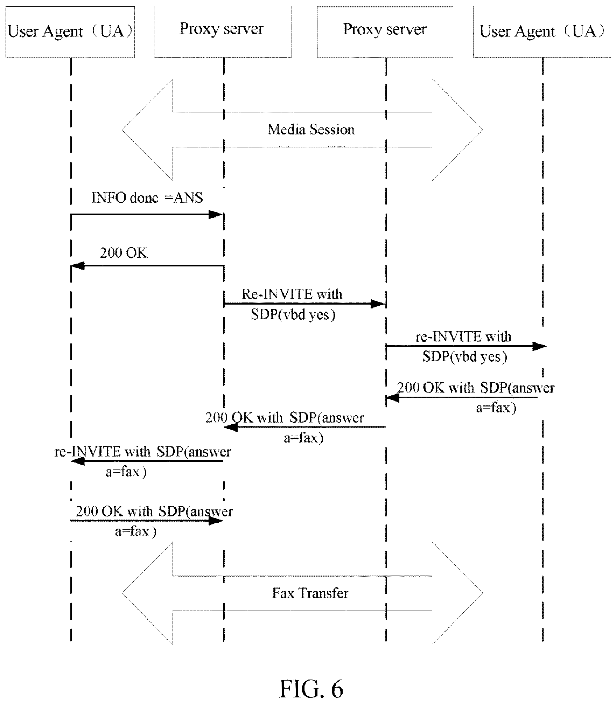

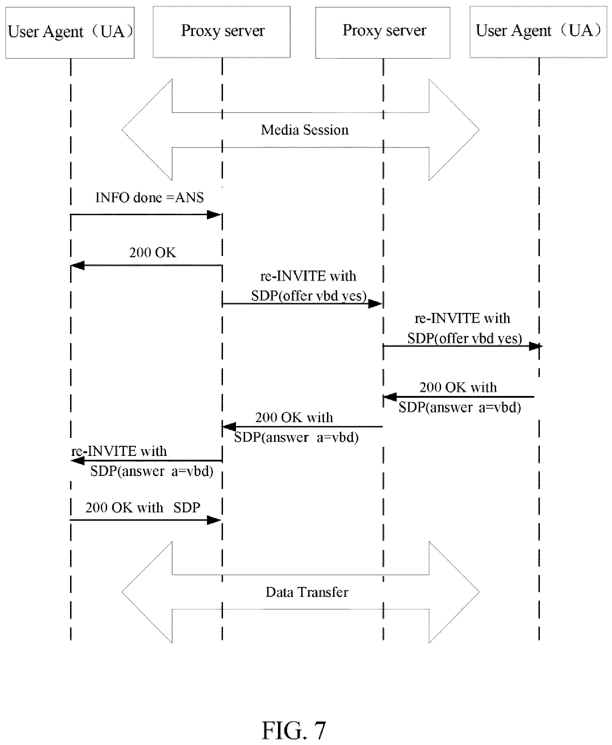

Fig. 6 is a flowchart in a scenario of receiving a fax at a low speed and transmitting a fax at a high speed according to a preferable embodiment of the present invention; and Fig. 7 is a flowchart of a POS machine establishing a data transfer channel according to a preferable embodiment of the present invention. As shown in Figs. 6 and 7, the above data service flows are similar, and the difference is that the types of the data services are different, that is, only the data services are different, and different processes will be performed. The similar flows will be described below.

After a voice channel is established normally, a called high-speed fax receiving end firstly detects a fax voice event, i.e., firstly detecting an ANS, and then detecting an ANSB AR signal before a timer expires. A called party UA notifies the ANSB AR signal to a called end ProxyServer through SIP INFO.

### Signaling instance:

INFO sip:mac@ims:5060; SIP/2.0
Via: SIP/2.0/UDP ims.com:5060;branch=z9hG4bK19c276952c547
From: "mac"<sip:mac@ims.com>;tag=1234abc
To: <sip: air@ims.com >;tag=abc1234
Call-ID: 0a22a1505a9fbc046eleeee5c0cafw885@ims.com
CSeq: 10 INFO
Contact: sip:ims.com
Max-Forwards: 70
Content-Length: 16
Content- Type: application/faxinfo+xml

```
 <?xml version="1.0"?>
 <mac-info>
 <event>dtone=ANSBAR</event>
 </mac-info>
```

After receiving the INFO message, the core network IMS (ProxyServer) answers with 200 OK representing that the fax voice is successfully received.

### Signaling instance:

SIP/2.0200 OK
Via: SIP/2.0/UDP ims.com:5060;branch=z9hG4bK19c276952c547
From: "mac"<sip:mac@ims.com>;tag=1234abc
To: <sip: air@ims.com >;tag=abc1234
Call-ID: 0a22a1505a9fbc046eleeee5c0cafw885@ims.com
CSeq: 10 INFO
Contact: sip:ims.com
Content-Length: 0

The ProxyServer transmits a re-INVITE to the calling party UA, constructs an SDP according to a fax mode configured by an IMS side, and transmits an SDP offer/answer mode to the calling party to complete codec selection of the fax. When receiving high-speed fax switching in the re-INVITE, the calling party UA needs to firstly close the voice channel, re-opens the channel in a fax mode, and closes Echo Cancellation (EC) attributes.

### Signaling instance:

INVITE sip:mac@ims:5060; SIP/2.0
Via: SIP/2.0/UDP ims.com:5060;branch=z9hG4bK19c276952c547
From: "mac"<sip:mac@ims.com>;tag=1234abc
To: <sip: air@ims.com >;tag=abc1234
Call-ID: 0a22a1505a9fbc046eleeee5c0cafw885@ims.com
CSeq: 2 INVITE
Contact: sip:ims.com

Allow: INVITE,ACK,CANCEL,BYE,PRACK,UPDATE, INFO,MESSAGE,NOTIFY,REFER
Expires: 1800
Max-Forwards: 70
Supported: replaces,timer
Content-Type: application/sdp
Content-Length: 239
v=0
o=ZTE 2687755 3 IN IP4 192.168.1.248
s=session SDP
c=IN IP4 192.168.1.248
t=0 0
m=image 10322 udptl t38
a=T38FaxVersion:0
a=T38MaxBitRate: 14400
a=T38FaxRateManagement:transferredTCF
a=T38FaxUdpEC :t38UDPRedundancy
a=sendrecv

The calling party UA selects a fax mode, and describes the selected fax mode in the SDP of 200 OK;

### Signaling instance:

SIP/2.0 200 ok
Via: SIP/2.0/UDP ims.com:5060;branch=z9hG4bK19c276952c547
From: "mac"<sip:mac@ims.com>;tag=1234abc
To: <sip: air@ims.com >;tag=abc1234
Call-ID: Oa22a1505a9fbc046eleeee5c0cafw885@ims.com
CSeq: 2 INVITE
Contact: sip:ims.com
Allow: INVITE,ACK,CANCEL,BYE,PRACK,UPDATE: INFO,MESSAGE,NOTIFY,REFER
Expires: 1800
Max-Forwards: 70
Supported: replaces,timer
Content-Type: application/sdp
Content-Length: 239
o=ZTE 2622219 4 IN IP4 192.168.1.248
s=session SDP
c=IN IP4 192.168.1.248
t=0 0
m=image 10320 udpt1 t38
a=sendrecv
a=T38FaxVersion:0
a=T38MaxBitRate: 14400
a=T38FaxRateManagement:transferredTCF
a=T38FaxUdpEC:t38UDPRedundancy

The ProxyServer transmits the re-INVITE to the called party UA, constructs an SDP according to a fax mode selected by a calling party, and transmits the SDP to the called party. The called party completes codec selection of the fax. When receiving high-speed fax switching in the re-INVITE, the called party UA needs to firstly close the voice channel, re-opens the channel in a fax mode, and closes Echo Cancellation (EC) attributes.

### Signaling instance:

INVITE sip:mac@ims:5060; SIP/2.0
Via: SIP/2.0/UDP ims.com:5060;branch=z9hG4bK19c276952c547
From: "mac"<sip:mac@ims.com>;tag=1234abc
To: <sip: air@ims.com >;tag=abc1234
Call-ID: 0a22a1505a9fbc046eleeee5c0cafw885@ims.com
CSeq: 2 INVITE
Contact: sip:ims.com
Allow: INVITE,ACK,CANCEL,BYE,PRACK,UPDATE: INFO,MESSAGE,NOTIFY,REFER
Expires: 1800
Max-Forwards: 70
Supported: replaces,timer
Content-Type: application/sdp
Content-Length: 239
v=0
o=ZTE 2622219 4 IN IP4 192.168.1.248
s=session SDP
c=IN IP4 192.168.1.248
t=0 0
m=image 10320 udptl t38
a=sendrecv
a=T3 8FaxVersion:0
a=T38MaxBitRate: 14400
a=T38FaxRateManagement:transferredTCF
a=T3 8FaxUdpEC :t3 8UDPRedundancy

The called party UA selects a fax mode, and describes the selected fax mode in the SDP of 200 OK;

### Signaling instance:

SIP/2.0 200 ok
Via: SIP/2.0/UDP ims.com:5060;branch=z9hG4bK19c276952c547
From: "mac"<sip:mac@ims.com>;tag=1234abc
To: <sip:air@ims.com >;tag=abc1234
Call-ID: 0a22a1505a9fbc046eleeee5c0cafw885@ims.com
CSeq: 2 INVITE
Contact: sip:ims.com
Allow: INVITE, ACK,CANCEL, BYE, PRACK, UPDATE, INFO,MESSAGE,NOTIFY,REFER
Expires: 1800
Max-Forwards: 70
Supported: replaces,timer
Content-Type: application/sdp
Content-Length: 239
v=0
o=ZTE 2687755 3 IN IP4 192.168.1.248
s=session SDP
c=IN IP4 192.168.1.248
t=0 0
m=image 10322 udptl t38
a=T38FaxVersion:0
a=T3 8MaxBitRate: 14400
a=T38FaxRateManagement:transferredTCF
a=T3 8FaxUdpEC :t3 8UDPRedundancy
a=sendrecv

It should be illustrated that the above fax receiving and transmitting ends can use a fax rate specified by the IMS side, for example, in a t38 fax mode, to start receiving and transmitting a fax. In addition, the above flow is a successful negotiation flow. If one of the calling/called parties has a failed signaling interaction process in the flow, the IMS will re-initiate negotiation, and conduct negotiation in a fax mode through the re-INVITE message again. With the above steps, a full-control fax service in the core network system is achieved, a fax voice is reported through an INFO message, and negotiation of the fax mode is re-invited. This scheme is clear and easy to implement, which largely enhances the stability of the fax service and the data-type service.

Obviously, those skilled in the art should understand that each module or each step of the aforementioned present invention can be implemented with general computing devices, and can be integrated in a single computing device, or distributed onto a network consisting of a plurality of computing devices; alternatively, they can be implemented with program codes executable by the computing devices, and therefore, they can be stored in storage devices to be executed by the computing devices; in some cases, the illustrated or described steps may be implemented in an order different from the order here; alternatively, they are respectively made into a plurality of integrated circuit modules; alternatively, it is to implement by making several modules or steps of them into a single integrated circuit module. Thus, the present invention is not limited to any specific combinations of hardware and software.

The above description is only the preferable embodiments of the present invention, which is not used to limit the present invention.

### Industrial applicability

As described above, with the embodiments of the present invention and preferable implementations, the following effects can be achieved: the problems in the related art that for negotiation using a media stream, a data service failure rate is high, the negotiation process is unclear, and a core network is unable to effectively control data service processing are solved, thereby achieving the effects of effectively improving a success rate of data service processing, making the negotiation process clear, and enabling the core network to effectively control the data service processing.

## Claims

1. A method for processing a data service based on a Session Initiation Protocol, SIP, **characterized by** comprising:
determining (S102), by a proxy server, based on a SIP INFO message received from a called party, a data service performed by a calling party based on the SIP; and
processing (S104), by the proxy server, the data service between the calling/called parties through a SIP re-INVITE message,
wherein the data service comprises at least one of the following:
a fax service and a modem service,
wherein in a case that the data service is a fax service, the SIP INFO message comprises a fax voice event, in a case that the data service is a modem service, the SIP INFO message comprises a Voice Band Data, VBD, signal event,
wherein processing the data service between the calling/called parties through a SIP re-INVITE message comprises: establishing and negotiating the data service between the calling/called parties by sending to the calling party the SIP re-INVITE message, based on the fax voice event or the VBD signal event in the SIP INFO message.

2. The method according to claim 1, wherein determining, based on a SIP INFO message, a data service performed by calling/called parties based on the SIP comprises:
determining, based on a data service event carried in a text form in a message header or a message body of the SIP INFO message, the data service performed by the calling/called parties based on the SIP.

3. The method according to claim 1, wherein in a case that the data service is a fax service, processing the data service between the calling/called parties through a re-INVITE message comprises:
negotiating on a fax rate and a fax mode of the fax service performed by the calling/called parties through the re-INVITE message; and
controlling the calling/called parties to switch a voice channel between the calling/called parties to a fax channel according to a negotiation result.

4. The method according to claim 3, wherein negotiating on a fax rate and a fax mode of the fax service performed by the calling/called parties through the re-INVITE message comprises at least one of the following:
when a fax transmitting side is high-speed faxing, in a case that a receiving side is low-speed faxing, determining that the negotiation result is low-speed transceiving;
when a fax transmitting side is low-speed faxing, in a case that a receiving side is low-speed faxing, determining that the negotiation result is low-speed transceiving;
when a fax transmitting side is high-speed faxing, in a case that a receiving side is high-speed faxing, determining that the negotiation result is high-speed transceiving; and
when a fax transmitting side is low-speed faxing, in a case that a receiving side is high-speed faxing, determining that the negotiation result is low-speed faxing.

5. The method according to any of claims 1-4, wherein processing the data service between the calling/called parties through a re-INVITE message comprises:
processing the data service between the calling/called parties by means of adding an identity field which is set to identify the data service in the SDP in the re-INVITE message.

6. A proxy server apparatus for processing a data service based on a Session Initiation Protocol, SIP, **characterized by** comprising:
a determination module (22) configured to determine, based on a SIP INFO message received from a called party,
a data service performed by a calling party based on the SIP; and
a processing module (24) configured to process the data service between the calling/called parties through a SIP re-INVITE message,
wherein the data service comprises at least one of the following:
a fax service and a modem service,
wherein in a case that the data service is a fax service, the SIP INFO message comprises a fax voice event, in a case that the data service is a modem service, the SIP INFO message comprises a Voice Band Data, VBD, signal event,
wherein the processing module (24) is further configured to:
establish and negotiate the data service between the calling/called parties by sending to the calling party the SIP re-INVITE message, based on the fax voice event or the VBD signal event in the SIP INFO message.

7. The apparatus according to claim 6, wherein the determination module comprises:
a determination unit (32) configured to determine, according to a data service event carried in a text form in a message header or a message body of the SIP INFO message in the SIP, the data service performed by calling/called parties based on the SIP.

8. The apparatus according to claim 6, wherein the processing module comprises:
a negotiation unit (42) configured to, in a case that the data service is a fax service, negotiate on a fax rate and a fax mode of the fax service performed by the calling/called parties through the re-INVITE message; and
a switching unit (44) configured to control the calling/called parties to switch a voice channel between the calling/called parties to a fax channel according to a negotiation result.

9. The apparatus according to any of claims 6-8, wherein the processing module comprises:
a processing unit (52) configured to process the data service between the calling/called parties by means of adding an identity field which is set to identify the data service in the SDP in the re-INVITE message.

## Patentansprüche

1. Verfahren zur Verarbeitung eines Datenservice, der auf einem SIP (Session Initiation Protocol) basiert, **dadurch gekennzeichnet, dass** das Verfahren umfasst:
Bestimmen (S102), durch einen Proxy-Server, eines Datenservice, der von einer anrufenden Partei, auf der Grundlage einer SIP-INFO-Nachricht, die von einer angerufenen Partei empfangen wurde durchgeführt wird; und
Verarbeitung (S104), durch den Proxy-Server, des Datenservice zwischen den anrufenden/angerufenen Parteien mittels einer SIP-Re-INVITE-Nachricht,
wobei der Datenservice mindestens eines der Folgenden umfasst:
einen Fax- und einen Modem-Service,
wobei im Falle, dass der Datenservice ein Fax-Service ist, die SIP-INFO-Nachricht ein Fax-Sprachereignis umfasst, im Falle, dass der Datenservice ein Modem-Service ist, die SIP-INFO-Nachricht ein VBD-Signalereignis (Voice Band Data) umfasst, wobei die Verarbeitung des Datenservice zwischen den anrufenden/gerufenen Parteien mittels einer SIP-Re-INVITE-Nachricht umfasst:
Einrichten und Aushandeln des Datenservice zwischen den anrufenden/angerufenen Parteien durch Senden der SIP-Re-INVITE-Nachricht an die anrufende Partei, basierend auf dem Fax-Sprachereignis oder dem VBD-Signalereignis in der SIP-INFO-Nachricht.

2. Verfahren nach Anspruch 1, wobei das Bestimmen eines Datenservice, der von anrufenden/angerufenen Parteien auf der Grundlage einer SIP-INFO-Nachricht durchgeführt wird, umfasst:
Bestimmen, basierend auf einem Datenserviceereignis, das in Textform in einem Nachrichtenkopf oder einem -körper der SIP-INFO-Nachricht, des Datenservices, der von den anrufenden/angerufenen Parteien auf der Grundlage der SIP durchgeführt wird, getragen wird.

3. Verfahren nach Anspruch 1, wobei im Falle, dass der Datenservice ein Fax-Service ist, das Verarbeiten des Datenservice zwischen den anrufenden/angerufenen Parteien durch eine Re-INVITE-Nachricht umfasst:
Verhandeln über eine Fax-Rate und einen Fax-Modus des Fax-Services, der von den anrufenden/angerufenen Parteien mittels der Re-INVITE-Nachricht durchgeführt wird; und
Steuern der anrufenden/angerufenen Parteien, um einen Sprachkanal zwischen den anrufenden/angerufenen Parteien auf einen Fax-Kanal entsprechend einem Verhandlungsergebnis umzuschalten.

4. Verfahren nach Anspruch 3, wobei das Aushandeln einer Fax-Rate und eines Fax-Modus des Fax-Services, der von den anrufenden/angerufenen Parteien mittels der Re-INVITE-Nachricht durchgeführt wird, mindestens eines der Folgenden umfasst:
Bestimmen, dass das Verhandlungsergebnis eine Niedriggeschwindigkeitsübertragung ist, wenn eine faxsendende Seite ein Hochgeschwindigkeitsfaxgerät und eine empfangende Seite ein Niedriggeschwindigkeitsfaxgerät ist,
Bestimmen, dass das Verhandlungsergebnis eine Niedriggeschwindigkeitsübertragung ist, wenn eine faxsendende Seite ein Niedriggeschwindigkeitsfaxgerät und eine empfangende Seite ein Niedriggeschwindigkeitsfaxgerät ist;
Bestimmen, dass das Verhandlungsergebnis eine Hochgeschwindigkeitsübertragung ist, wenn eine faxsendende Seite ein Hochgeschwindigkeitsfaxgerät und eine empfangende Seite ein Hochgeschwindigkeitsfaxgerät ist; und
Bestimmen, dass das Verhandlungsergebnis eine Niedriggeschwindigkeitsübertragung ist, wenn eine faxsendende Seite ein Niedriggeschwindigkeitsfaxgerät und eine empfangende Seite ein Hochgeschwindigkeitsfaxgerät ist.

5. Verfahren nach einem der Ansprüche 1-4, wobei das Verarbeiten des Datenservice zwischen den anrufenden/angerufenen Parteien mittels einer Re-INVITE-Nachricht umfasst:
Verarbeiten des Datenservice zwischen den anrufenden/angerufenen Parteien durch Hinzufügen eines Identitätsfeldes, das festgelegt ist, um den Datenservice im SDP in der Re-INVITE-Nachricht zu identifizieren.

6. Proxy-Server-Gerät zur Verarbeitung eines Datenservice, der auf einem SIP (Session Initiation Protocol) basiert, **dadurch gekennzeichnet, dass** das Gerät Folgendes umfasst:
ein Bestimmungsmodul (22), das konfiguriert ist, um auf der Grundlage einer SIP-INFO-Nachricht, die von einer angerufenen Partei empfangen wurde, einen Datenservice zu bestimmen, der von einer anrufenden Partei auf der Grundlage der SIP durchgeführt wurde; und
ein Verarbeitungsmodul (24), das konfiguriert ist, um den Datenservice zwischen den anrufenden/angerufenen Parteien mittels einer SIP-Re-INVITE-Nachricht zu verarbeiten,
wobei der Datenservice mindestens eines der Folgenden umfasst:
einen Fax- und einen Modem-Service,
wobei im Falle, dass der Datenservice ein Fax-Service ist, die SIP-INFO-Nachricht ein Fax-Sprachereignis umfasst, im Falle, dass der Datenservice ein Modem-Service ist, die SIP-INFO-Nachricht ein VBD-Signalereignis (Voice Band Data) umfasst,
wobei das Verarbeitungsmodul (24) weiterhin konfiguriert ist, um:
den Datenservice zwischen den anrufenden/angerufenen Parteien einzurichten und auszuhandeln, indem der anrufenden Partei die SIP-Re-INVITE-Nachricht auf der Grundlage des Fax-Sprachereignisses oder des VBD-Signalereignisses in der SIP-INFO-Nachricht gesendet wird.

7. Gerät nach Anspruch 6, wobei das Bestimmungsmodul umfasst:
eine Bestimmungseinheit (32), die konfiguriert ist, um entsprechend einem Datenserviceereignis, das in einer Textform in einem Nachrichtenkopf oder einem -körper der SIP-INFO-Nachricht in der SIP getragen wird, den Datenservice zu bestimmen, der von den anrufenden/angerufenen Parteien auf der Grundlage der SIP durchgeführt wird.

8. Gerät nach Anspruch 6, wobei das Verarbeitungsmodul umfasst:
eine Verhandlungseinheit (42), die konfiguriert ist, um im Falle, dass der Datenservice ein Fax-Service ist, über eine Fax-Rate und einen Fax-Modus des Fax-Service zu verhandeln, der von den anrufenden/angerufenen Parteien mittels der Re-INVITE-Nachricht durchgeführt wird; und
eine Schalteinheit (44), die konfiguriert ist, um die anrufenden/angerufenen Parteien zu steuern, um einen Sprachkanal zwischen den anrufenden/angerufenen Parteien auf einen Fax-Kanal entsprechend einem Verhandlungsergebnis umzuschalten.

9. Gerät nach einem der Ansprüche 6-8, wobei das Verarbeitungsmodul umfasst:
eine Verarbeitungseinheit (52), die konfiguriert ist, um den Datenservice zwischen den anrufenden/angerufenen Parteien zu verarbeiten, indem ein Identitätsfeld hinzugefügt wird, das festgelegt ist, um den Datenservice im SDP in der Re-INVITE-Nachricht zu identifizieren.

## Revendications

1. Procédé de traitement d'un service de données basé sur un SIP (Session Initiation Protocol), **caractérisé en ce que** le procédé comprend :
déterminer (S102), par un serveur mandataire, sur la base d'un message SIP INFO reçu d'une partie appelée, un service de données effectué par une partie appelante sur la base du SIP ; et
traiter (S104), par le serveur mandataire, le service de données entre les parties appelantes/appelées au moyen d'un message SIP de réinvitation,
dans lequel le service de données comprend au moins un des éléments suivants :
un service de fax et un service de modem,
dans lequel, en cas que le service de données est un service de fax, le message SIP INFO comprend un événement vocal de fax, en cas que le service de données est un service de modem, le message SIP INFO comprend un événement de signal VBD (Voice Band Data), dans lequel le traitement du service de données entre les parties appelantes/appelées au moyen d'un message SIP de réinvitation comprend:
établir et négocier le service de données entre les parties appelantes/appelées en envoyant à la partie appelante le message SIP de réinvitation, basé sur l'événement vocal de fax ou l'événement de signal VBD dans le message SIP INFO.

2. Procédé selon la revendication 1, dans lequel déterminer, sur la base d'un message SIP INFO, un service de données effectué par les appelants/appelés sur la base du SIP comprend :
déterminer, sur la base d'un événement de service de données porté sous forme de texte dans un en-tête de message ou un corps de message du message SIP INFO, le service de données effectué par les parties appelantes/appelées sur la base du SIP.

3. Procédé selon la revendication 1, dans lequel, en cas que le service de données est un service de fax, le traitement du service de données entre les parties appelantes/appelées au moyen d'un message de réinvitation comprend :
négocier un taux et un mode de fax du service de fax effectué par les parties appelantes/appelées au moyen du message de réinvitation ; et
contrôler les parties appelantes/appelées afin de commuter un canal vocal entre les parties appelantes/appelées vers un canal de fax selon le résultat d'une négociation.

4. Procédé selon la revendication 3, dans lequel négocier un taux et un mode de fax du service de fax effectué par les parties appelantes/appelées au moyen du message de réinvitation comprend au moins un des éléments suivants :
lorsqu'un côté émetteur de fax est un fax à grande vitesse, en cas que le côté récepteur est un fax à faible vitesse, déterminer que le résultat de la négociation est une émission de fax à faible vitesse ;
lorsqu'un côté émetteur de fax est un fax à faible vitesse, en cas que le côté récepteur est un fax à faible vitesse, déterminer que le résultat de la négociation est une émission de fax à faible vitesse ;
lorsqu'un côté émetteur de fax est un fax à grande vitesse, en cas que le côté récepteur est un fax à grande vitesse, déterminer que le résultat de la négociation est une émission de fax à grande vitesse ; et
lorsqu'un côté émetteur de fax est un fax à faible vitesse, en cas que le côté récepteur est un fax à grande vitesse, déterminer que le résultat de la négociation est une émission de fax à faible vitesse.

5. Procédé selon l'une des revendications 1 à 4, dans lequel le traitement du service de données entre les parties appelantes/appelées au moyen d'un message de réinvitation comprend :
traiter le service de données entre les parties appelantes/appelées par l'ajout d'un champ d'identité qui est défini pour identifier le service de données dans le PDS dans le message de réinvitation.

6. Dispositif serveur mandataire pour traiter un service de données basé sur un SIP (Session Initiation Protocol), **caractérisé en ce que** le serveur mandataire comprend :
un module de détermination (22) configuré pour déterminer, sur la base d'un message SIP INFO reçu d'une partie appelée, un service de données effectué par une partie appelante sur la base du SIP ; et
un module de traitement (24) configuré pour traiter le service de données entre les parties appelantes/appelées au moyen d'un message SIP de réinvitation,
dans lequel le service de données comprend au moins un des éléments suivants :
un service de fax et un service de modem,
dans lequel, en cas que le service de données est un service de fax, le message SIP INFO comprend un événement vocal de fax, en cas que le service de données est un service de modem, le message SIP INFO comprend un événement de signal VBD (Voice Band Data),
dans lequel le module de traitement (24) est en outre configuré pour :
établir et négocier le service de données entre les parties appelantes/appelées en envoyant à la partie appelante le message SIP de réinvitation, sur la base de l'événement vocal de fax ou de l'événement de signal VBD dans le message SIP INFO.

7. Dispositif selon la revendication 6, dans lequel le module de détermination comprend :
une unité de détermination (32) configurée pour déterminer, selon un événement de service de données porté sous forme de texte dans un en-tête de message ou un corps de message du message SIP INFO dans le SIP, le service de données effectué par les appelants/appelés sur la base du SIP.

8. Dispositif selon la revendication 6, dans lequel le module de traitement comprend :
une unité de négociation (42) configurée pour, en cas que le service de données est un service de fax, négocier un taux et un mode de fax du service de fax effectué par les parties appelantes/appelées au moyen du message de réinvitation ; et
une unité de commutation (44) configurée pour contrôler les parties appelantes/appelées afin de commuter un canal vocal entre les parties appelantes/appelées vers un canal de fax selon un résultat de négociation.

9. Dispositif selon l'une des revendications 6 à 8, dans lequel le module de traitement comprend :
une unité de traitement (52) configurée pour traiter le service de données entre les parties appelantes/appelées par l'ajout d'un champ d'identité qui est défini pour identifier le service de données dans le PDS dans le message de réinvitation.
